# DEMANDE DE BREVET EUROPEEN

(11) **EP 4 778 383 A1**
(43) Date de publication de la demande: **22.07.2026**
(21) Numéro de dépôt: 26151340.2
(22) Date de dépôt: 12.01.2026
(51) Int. Cl.: A01G 17/00

(54) **MÉTHODE DE VÉGÉTALISATION ET DE RENATURATION D'UN LIEU**

(30) Priorité: 15.01.2025 EP 25305044
(71) Demandeur: Atelier de la Foret Gourmande, 71330 Diconne (FR)
(72) Inventeur: DESJOURS, Fabrice, 71330 Diconne (FR)
(74) Mandataire: Kessler, Marc

(57) **Abrégé**

La présente invention se rapporte à une méthode de végétalisation, et une méthode de renaturation, d'un lieu anthropique, comprenant les étapes de prendre un site anthropique à végétaliser, de choisir les espèces végétales à implanter parmi des espèces végétales indigènes, des espèces végétales reliques ou relictuelles, et des espèces végétales analogues modernes, de déterminer un schéma de plantation, et d'implanter les espèces végétales sélectionnées. L'invention porte également sur un ensemble de végétaux non implantés, et sur un site anthropique végétalisé, un écosystème de site anthropique et une plantation forestière d'établissement obtenus à l'aide des méthodes selon l'invention.

## Description

### Objet de l'invention

La présente invention concerne le domaine de la restauration écologique d'un lieu, et porte en particulier sur une méthode de végétalisation, et une méthode de renaturation, d'un lieu anthropique.

### Etat de la technique

En Europe la diversité en végétaux ligneux, dite dendroflore, n'a cessé de chuter depuis 2,5 millions d'années, lors du Pléistocène. Les forêts actuelles, qu'elles soient artificielles, naturelles ou primaires, déjà très appauvries dans leur composition et leur structure par les effets de l'ère glaciaire du Quaternaire, font désormais face à de nombreuses menaces et à des dépérissements, du fait de l'action combinée des changements climatiques, de maladies et de parasites émergents, de l'emprise des actions humaines, comme l'agriculture, la sylviculture, le pâturage-élevage et l'urbanisation, de la fragmentation des zones naturelles, et ce malgré une certaine dynamique constatée de ré-ensauvagement spontané à l'échelle d'un continent, notamment par déprise agricole, un phénomène permettant le retour d'une certaine dynamique sauvage.

Les fluctuations climatiques actuelles entraînent des mutations de nos paysages, notamment forestiers, soulevant la question de l'adaptation des flores ligneuses et de l'indigénat climatique dans un monde au climat déréglé. Certes les végétaux, s'adaptent par génétique et épigénétique et migrent, mais à un rythme sans comparaison possible avec celui des changements en cours. Se pose alors la question de savoir quelles espèces et quelles formations végétales forestières seront adaptées aux différents scénarios climatiques envisagés. Un écosystème diversifié est plus apte à défier les maladies et les chocs climatiques. Au Néogène, voire au début du Pléistocène, les compositions et structures forestières du continent Européen étaient très similaires à celles, complexes, des forêts asiatiques et nord-américaines contemporaines.

Les activités humaines affectent les zones forestières, simplifiant encore leur structure et leur composition au profit de la seule production. En effet, les forêts naturelles sont généralement défrichées pour utiliser le bois comme combustible de chauffage, la construction, l'aménagement ou la décoration des habitations, ou bien pour faire place à des cultures, des pâturages, ou encore pour permettre l'expansion des villes ou l'exploitation de ressources minières, créant ainsi des zones dites « anthropiques », en opposition aux zones naturelles qui sont dites « non anthropiques ». Par ailleurs, la pollution en général, et le changement climatique affectent également les zones boisées, en rendant les espèces végétales plus sensibles aux incendies ou aux infections par des pathogènes, des insectes, notamment nouvellement introduits.

Richard J. HOBBS, dans son article « Novel ecosystems: implications for conservation and restoration », publié dans la revue « Trends in Ecology and Evolution » au Volume 24 No 11, pages 599 à 605, traite des moyens de gestion des écosystèmes qui ont subi des transformations irréversibles, comme des d'écosystèmes « hybrides », qui conservent certaines caractéristiques d'origine tout en intégrant des éléments nouveaux, et des « nouveaux écosystèmes », qui sont la résultante de changements biotiques, à savoir des extinctions ou invasions d'espèces, et/ou de changements abiotiques, comme des modifications physiques de l'environnement par l'utilisation des terres, la pollution, l'urbanisation et les apports de nutriments. Richard HOBBS propose de nouvelles pratiques de gestion adaptative de ces écosystèmes, qui tiennent compte de seuils écologiques au-delà desquels le retour à l'état historique n'est pas à privilégier car très coûteux, voire impossible à mener. Plutôt que de viser systématiquement le retour à un écosystème historique, Richard HOBBS suggère de gérer les nouveaux écosystèmes pour leurs propres valeurs, leurs fonctions écologiques, leurs services écosystémiques, leur biodiversité. Il propose de choisir entre 1) la conservation ou la restauration de l'écosystème historique, 2) la restauration des structures et fonctions clés de l'écosystème si elles sont encore possibles, sans retour à l'état d'origine, et 3) le maintien des nouveaux écosystèmes, et ce, en fonction d'un ou plusieurs critères, choisis parmi la stabilité de l'évolution de l'écosystème en question, sa résistance et sa résilience, son efficacité thermodynamique, sa capacité à fournir des biens et des services écosystémiques, son offre en termes de possibilités d'engagement individuel ou communautaire.

S'agissant de zones naturelles qui ont été défrichées, il a été proposé de les revégétaliser en employant des essences végétales restreints soit pour restaurer la forêt dans son état qui avait été le sien préalablement à son défrichement, soit pour répondre à des besoins humains particuliers, conduisant ainsi à la création de forêts peu diversifiées, par nature fragilisée dans le contexte qui est le nôtre.

Dans son ouvrage intitulé *«* Large-scale Forest Restoration », paru en 2014 aux éditions Routledge (Taylor & Francis Group), aux pages 115 à 142, David LAMB décrit trois types de reforestation possibles, l'une étant la foresterie industrielle avec des monocultures, généralement basée sur une espèce végétale exotique, l'autre étant les plantations mixtes, et le dernier étant la restauration écologique, cette dernière pouvant se faire selon une première approche qui consiste en la restauration de l'écosystème d'origine du site dans son état post-glaciaire, ou selon une seconde approche qui met en jeu des nouveaux écosystèmes, sans nécessairement chercher à revenir à l'état historique antérieur supposé. Dans la première approche, il est possible d'utiliser des parcelles résiduelles de forêt naturelle à proximité du site à reboiser, capables de fournir de nouvelles espèces colonisatrices, ainsi que sur une faune suffisante pour transporter ces graines à travers le paysage environnant des espèces supplémentaires colonisant le site depuis la forêt intacte adjacente, ou bien replanter autant que possible la flore d'origine, toutes les espèces d'arbres en une seule fois. La second approche utilise le remplacement des espèces indigènes, qui ne sont plus capables de tolérer les conditions environnementales du site, par des espèces exotiques facilitant l'établissement d'espèces indigènes, et devant adopter une répartition spatiale aléatoire. Comme le souligne David LAMB, la restauration écologique est généralement considérée comme la méthode de référence en matière de reboisement, mais sa mise en œuvre état souvent difficile et couteuse, une alternative pouvant être la plantation d'espèces diversifiées et multi spécifiques, constituant des analogues fonctionnels, y compris, si nécessaire, des espèces exotiques.

Dans son article scientifique intitulé « Undertaking large-scale forest restoration to generate ecosystem services », publié en 2018, dans la revue « Restoration Ecology », volume 26, numéro 4, pages 657 à 666, David LAMB discute les conséquences de la plantation d'un nombre limité d'espèces végétales et les effets de cette pratique sur la fourniture de services écosystémiques, comme la séquestration de carbone, la régulation de l'érosion, la biodiversité, dans le cadre d'une volonté de restauration des forêts à une grande échelle. David LAMB fait état d'une relation entre richesse des espèces d'arbres et les services écosystémiques procurés, plus la richesse est importante, plus les services écosystémiques complexes rendus sont importants. Il indique que l'emplacement de la restauration est également déterminant pour l'efficacité des services écosystémiques et suggère, même s'il est difficile de définir des priorités, de choisir les emplacements en fonction du service écosystémique visé. David LAMB conclut que toute opération de reboisement à grande échelle est difficile à réaliser, mais qu'il existe des preuves que la restauration de forêts avec seulement des niveaux modestes d'espèces peut générer certains services écosystémiques, à condition que des espèces aux caractéristiques appropriées soient utilisées, ces caractéristiques appropriées devant être étudiées afin de savoir lesquelles sont requises pour générer ces services particuliers, afin d'utiliser des assemblages d'espèces appropriés plutôt que de simples mélanges d'espèces facilement_disponibles.

Toutefois, à ce jour, aucune solution polyvalente n'a été proposée pour végétaliser ou renaturer des zones anthropiques, à savoir des espaces fortement modifiés ou fabriqués par l'homme, qui sont très hétérogènes dans leur nature, leur constitution matérielle, leurs propriétés physico-chimiques et leur structure spatiale.

### Buts de l'invention

La présente invention vise à fournir une méthode de végétalisation et une méthode de renaturation, d'un lieu anthropique, qui ne présentent pas les inconvénients de l'état de la technique.

La présente invention vise à fournir une alternative aux solutions de l'état de la technique existantes.

La présente invention vise à fournir une méthode de végétalisation qui soit polyvalente pour des sites anthropiques qui sont hétérogènes.

La présente invention vise à fournir une méthode de végétalisation à grande échelle, qui procure une diversité végétale importante et réfléchie, mieux intégrée dans l'environnement du lieu considéré, qui contribue à la purification de l'eau, à la séquestration du carbone, à la modulation du climat, à la restauration des sols, à la régulation des inondations et qui favorise le retour de la biodiversité microbienne et faunistique.

La présente invention vise à fournir un ensemble de végétaux à implanter sur un site anthropique, permettant, une fois implanté, une végétalisation et une renaturation d'un site anthropique et permettant de lui conférer des caractéristiques naturelles néogènes ou pré-glaciaires, une biodiversité végétale restaurée,

La présente invention vise à fournir un site anthropique revégétalisé, une plantation forestière d'établissement et un écosystème, ayant une meilleure résilience environnementale, une meilleure adaptation aux changements climatiques, et qui est un outil de recherche, d'éducation et/ou de sensibilisation, et qui pourra conférer à la forêt secondaire qui en découlera et à l'écosystème d'avoir une capacité de régénération et d'adaptation qui sont améliorées.

### Résumé de l'invention

La méthode de végétalisation d'un lieu anthropique selon l'invention comprend les étapes de prendre un site anthropique à végétaliser, de choisir et prendre les espèces végétales, à implanter sur le site anthropique, dans les catégories des espèces végétales indigènes, regroupant les espèces végétales actuelles, naturellement présentes sur le territoire, la région géographique ou le pays, dans lequel se situe le site anthropique, des espèces végétales reliques ou relictuelles, regroupant les espèces végétales qui étaient présentes, à la fin du Néogène et/ou au début de Pléistocène, sur le territoire, la région ou le pays, dans lequel se situe le site anthropique, des espèces végétales analogues modernes, regroupant les espèces végétales proches parentes actuelles des espèces végétales éteintes, mais ayant été présentes au Néogène et/ou au début de Pléistocène, sur le territoire, la région ou le pays, dans lequel se situe le site anthropique, de déterminer un schéma de plantation des espèces végétales sélectionnées sur le site anthropique, définissant des densités et des emplacements d'implantation pour chacune des espèces végétales sélectionnées, d'implanter les espèces végétales choisies sur le site anthropique, selon le schéma déterminé.

Selon des modes préférés de l'invention, la méthode de végétalisation selon l'invention comprend au moins une, ou une combinaison quelconque appropriée, des caractéristiques suivantes :
- le choix des espèces végétales à implanter, parmi les espèces végétales analogues modernes, se fait en fonction de la proximité génétique, cladistique, morphologique, phytosociologique, d'amplitude écologique, et une combinaison quelconque de ceux-ci, des espèces végétales actuelles avec les espèces végétales éteintes,
- les espèces végétales indigènes représentent 30 à 50%, les espèces végétales reliques ou relictuelles 5 à 10%, et les espèces végétales analogues modernes 40 à 65%, de l'ensemble des espèces végétales sélectionnées,
- le schéma de plantation, desdites espèces végétales choisies sur le site anthropique, définit quatre strates végétales, une première étant celle des arbres, une seconde étant celle des arbustes, une troisième étant celle des lianes, la quatrième étant celle des herbacées,
- le schéma de plantation comprend un espacement moyen et irrégulier de 8 à 30 mètres pour les arbres majeurs des espèces végétales choisies, de 6 à 45 mètres pour les arbustes des espèces végétales choisies, de 20 à 200 mètres pour les lianes des espèces végétales choisies, et une répartition diffuse pour les herbacées des espèces végétales choisies,
- l'étape d'implanter les espèces végétales choisies sur le site anthropique se fait concomitamment à une étape d'implantation d'espèces végétales supplémentaires, en plus des espèces végétales choisies, selon une disposition d'implantation prédéterminée,
- il est prévu une étape de restauration du microbiote du sol du lieu anthropique, qui comprend une étape d'ensemencer le sol du site anthropique, d'enrober les graines des espèces végétales choisies, d'ensemencer les racines des espèces végétales choisies, et une combinaison quelconque de celles-ci, à l'aide d'un ou plusieurs microbiotes,
- le ou les microbiotes est ou sont ceux d'une ou plusieurs forêts ancestrales,
- il est prévu une étape préalable d'identifier un ou plusieurs sites anthropiques à végétaliser, ou une étape préalable de détermination si un site donné peut être considéré comme adéquat,
- l'étape d'identification du site anthropique à végétaliser, ou l'étape de détermination du site anthropique à végétaliser, se fait selon un ou plusieurs critères, choisis parmi un critère physico-chimiques, un critère climatique, un critère topographique, et éventuellement un critère biologique et un critère administratif, et une combinaison quelconque de ceux-ci,
- le critère physico-chimique est, ou comprend la texture du sol du site anthropique et/ou son pH, le critère climatique est, ou comprend, la nature du climat dudit site anthropique, le critère topographique est, ou comprend, la topographie dudit site anthropique et son hydrographie, le critère biologique est, ou comprend, la présence de corridors biologiques à proximité dudit site anthropique, le critère administratif est, ou comprend, la superficie dudit site anthropique,
- le site anthropique est choisi parmi un site urbain, un site agricole, un site industriel, une zone récréative, et une combinaison quelconque de ceux-ci.

La présente invention porte également sur l'utilisation de la méthode de végétalisation selon l'invention pour la renaturation d'un site anthropique.

La présente invention porte en outre sur un ensemble de végétaux non implantés, un site anthropique végétalisé, un écosystème de site anthropique végétalisé et une plantation forestière d'établissement, qui sont obtenus par la mise en œuvre de la méthode de végétalisation selon l'invention.

La présente invention porte aussi sur un ensemble de végétaux non implantés, un site anthropique végétalisé, un écosystème de site anthropique végétalisé et une plantation forestière d'établissement, comprenant des individus distincts d'espèces végétales choisis dans les catégories des espèces végétales indigènes, présentes sur le territoire, la région géographique ou le pays, dans lequel se situe le site anthropique, des espèces végétales reliques ou relictuelles, qui étaient présentes, au Néogène et/ou au début de Pléistocène, sur le territoire, la région ou le pays, dans lequel se situe le site anthropique, et des espèces végétales analogues modernes d'espèces éteintes, ayant été présentes au Néogène et/ou au début de Pléistocène, sur le territoire, la région ou le pays, dans lequel se situe le site anthropique, les espèces végétales étant réparties sur le site anthropique selon des densités et des emplacements d'implantation pour chacune des espèces végétales sélectionnées, définis selon un schéma de plantation déterminé.

### Description détaillée de l'invention

Dans la suite de la description de la présente invention, les termes « lieu », « zone » et « site » sont utilisés comme synonymes pour désigner un espace physique sur lequel est mis en œuvre les étapes des méthodes selon l'invention. Le terme « Néogène » désigne une période comprise entre -23,03 et -2,58 millions d'années avant le présent, et le terme « Pléistocène » désigne une période s'étendant de -2,58 millions d'années à 11700 ans avant le présent.

Dans le cadre de la présente invention, le lieu à végétaliser et à renaturer est une zone anthropique, allant de sols agricoles jusqu'aux anthroposols ou jusqu'aux technosols, à savoir un espace géographique dont le sol a été modifié, travaillé ou fabriqué, par l'homme, mais qui est tout de même capable de porter une végétation forestière. En tout état de cause, il ne s'agit pas d'un site dit « naturel », ou « isolé », n'ayant pas été transformé par l'homme. Il s'agit d'une zone dont les caractéristiques naturelles ont été altérées pour répondre aux besoins humains, que ce soit, par exemple, par la construction de bâtiments, l'aménagement de routes, l'agriculture ou d'autres formes d'exploitation des ressources, et dont l'écosystème est très différent de celui des zones naturelles. Cela inclut les environnements urbains, agricoles, industriels, des zones récréatives, et les combinaisons quelconques de ceux-ci.

Le lieu à végétaliser et renaturer peut être un sol agricole ou anthroposol dit « transformé », résultant de modifications réalisées en zones rurales, pour améliorer la fertilité des sols et permettre une meilleure production, un anthroposol dit « artificiel », résultant d'apports de matériaux artificiels, un anthroposol dit « reconstitué », résultant de matériaux transportés, de la terre transportée par exemple, un anthroposol dit « construit », résultant de la construction d'un sol utilisant des matériaux technologiques, ou un technosol, un sol contenant plus de 20% d'artefacts, des matériaux créés ou amenés à la surface par des activités de construction, d'excavation, de remblayage, de dépôt de matériaux et d'autres interventions anthropiques.

De préférence, la zone anthropique est un sol agricole, avantageusement dégradé, à savoir comprenant peu de diversité végétale inter et intraspécifique, avantageusement également déficient, ou pauvre, en microorganismes telluriques et en phytobiote.

Le site anthropique peut être dénué de tout ou partie d'arbres ou d'arbustes, d'herbes, de mousses ou d'éléments issus de coupes ou de la dégradation végétale, quel que soit leur stade de développement.

La méthode de végétalisation selon l'invention comprend les étapes de prendre un lieu anthropique à végétaliser, de choisir les espèces végétales à implanter sur le lieu anthropique à végétaliser, de déterminer un schéma de plantation des espèces végétales choisies, d'implanter, semer ou planter, sur le lieu anthropique, les espèces végétales choisies, selon ce schéma déterminé, l'étape finale de la méthode selon l'invention étant la végétalisation effective du lieu anthropique considéré, à savoir au moins le reboisement du site, un reboisement néogène diversifié.

La méthode de végétalisation selon l'invention ne comprend pas d'étapes subséquentes de croisements des végétaux implantés sur le lieu anthropique, ni d'étape ultérieure de sélection de végétaux croisés, pour sélectionner des végétaux ayant un caractère phénotypique spécial, obtenus par ces croisements. Elle ne consiste pas en, et par conséquent n'est pas, une méthode d'obtention de végétaux, et a fortiori, elle n'est pas une méthode essentiellement biologique d'obtention de végétaux. Dans la présente invention, il n'est pas question d'obtenir des végétaux particuliers, par un croisement suivi d'une sélection, mais bien de végétaliser un lieu, à savoir restaurer la végétation sur le lieu en question.

La méthode de végétalisation selon l'invention peut comprendre une étape préalable d'identification d'un ou plusieurs lieux anthropiques à végétaliser, afin d'établir une liste de sites dans laquelle un choix pourra être opéré avant la mise en œuvre de la méthode de végétalisation, ou une étape préalable de détermination si un site donné peut être considéré comme adéquat, ou non, pour la mise en œuvre de la méthode de végétalisation. Cela présente l'avantage d'optimiser les chances de succès de la méthode selon l'invention et donc d'optimiser la renaturation.

L'identification ou la détermination du site à végétaliser se fait en fonction d'un ou plusieurs critères, choisis parmi un critère physico-chimiques, un critère climatique, un critère topographique, éventuellement un critère biologique et éventuellement également un critère administratif, ou une ou plusieurs combinaisons quelconques de ceux-ci, et met en œuvre une ou plusieurs étapes de mesure, d'enregistrement et d'analyse d'un ou plusieurs paramètres en relation avec chacun de ces critères. Les paramètres mesurés sont comparés à des valeurs cibles ou gammes de valeurs limites, préalablement déterminées comme permettant de remplir le critère lié aux paramètres. Si les paramètres mesurés sont conformes, à savoir identiques ou proches, aux valeurs cibles ou gammes de valeurs limites, le critère lié aux paramètres analysés est alors considéré comme rempli.

De préférence, le lieu à végétaliser est celui qui remplit l'ensemble des critères physico-chimiques, climatiques, topographiques, avantageusement également combinés aux critères biologiques et administratifs.

L'identification ou la détermination du site à végétaliser peut mettre en œuvre des moyens matériels et logiciels, des moyens de stockage et de traitement, d'un système informatique, comprenant par exemple un ordinateur.

Le critère physico-chimique est, ou comprend, au moins la texture du sol, et donc sa composition en argiles, limons et sables, sa structure, qui détermine sa perméabilité et donc sa capacité de rétention des nutriments et de l'eau, et avantageusement également son pH, qui détermine la biodisponibilité des minéraux et la nature de la végétation que le sol peut porter.

L'analyse de la texture du sol du site considéré, de préférence à plusieurs endroits dudit site, se fait par tous moyens adéquats. Il est possible, par exemple, de pratiquer une fosse dans le sol, ou d'extraire un bloc de terre, et d'évaluer visuellement, et éventuellement également par le toucher, l'agencement et la porosité le la terre de la fosse ou du bloc. Néanmoins, de préférence, des échantillons de sol sont prélevés à plusieurs endroits du site, et la composition de chaque échantillon est analysée, en laboratoire, grâce, par exemple, à des techniques de sédimentation ou à un granulomètre LASER.

L'analyse du pH du sol du site peut se faire par tous moyens adéquats, par exemple par l'emploi d'un pH-mètre, mis en œuvre sur plusieurs échantillons de sol recueillis à plusieurs endroits du site.

Le critère physico-chimique est considéré comme rempli si le sol comprend entre 15 et 45 % en poids des argiles, 15 à 60% en poids des limons et 10 et 35% des sables. S'agissant du pH, le critère est considéré comme rempli si le pH moyen des échantillons analysés est compris entre 4,5 et 9.

Le critère climatique est, ou comprend, la nature du climat du site considéré.

L'identification ou la détermination du site à végétaliser comprend une étape d'analyse du climat actuel du site, qui se fait à l'aide de mesures des températures, de pressions atmosphériques, du niveau des précipitations, de vitesse et de direction des vents, du niveau d'ensoleillement, à différents endroits topographiques caractéristiques du site, de préférence à différentes périodes d'une année, avantageusement à différentes altimétries significatives si elles existent, éventuellement également une étape de compilation des données climatiques passées concernant le site, ou de la station météorologique la plus proche du site, des vingt dernières années, et de préférence également la compilation de données issues de simulations climatiques concernant le site dans les prochaines 25, 50, 80 et/ou 100 prochaines années.

Le critère climatique est considéré comme rempli, si le site jouit et/ou jouira dans les 20 années à venir, d'un climat correspondant à celui de la période du Néogène et/ou au début de Pléistocène, en Europe, de préférence, un climat allant d'un climat océanique à un climat continental tempéré, marqué par des précipitations modérées à élevées, entre 500mm et 2000mm, réparties tout au long de l'année ou selon une certaine saisonnalité.

Le critère topographique est, ou comprend, la topographie du site et éventuellement également l'hydrographie.

L'identification ou la détermination du site à végétaliser comprend une étape de détermination de la forme du ou des reliefs du site, de réalisation de mesures d'altitude, de préférence des points géographiques caractéristiques du site en question, comme le fond des plaines et/ou le sommet des collines ou montagnes, de préférence également la détermination de la présence de cours d'eau ou de fleuves, de bassins ou de lacs et des mesures de leur profondeur.

De préférence, sur la base de ces mesures, il est établi une cartographie de la topographique, et éventuellement de l'hydrographique, du site considéré.

L'analyse de la topographie, et éventuellement de l'hydrographie, se fait par l'emploi de tous moyens adéquats, comme par exemple un arpenteur, un distancemètre électronique, un télémètre LASER, le positionnement par satellites, la géodésie spatiale, l'imagerie spatiale, un sondeur acoustique, un sonar, ou une combinaison quelconque de ceux-ci.

Le critère topographique est considéré comme rempli, si le site comprend 50% de sa surface totale en pentes douces à modérées, à savoir des pentes n'excédant pas 10 à 15%, ce qui présente l'avantage de procurer une bonne distribution des eaux de surface sans risque d'érosion excessive.

Le critère biologique est un critère optionnel. Il est, ou comprend, la proximité de corridors biologiques.

L'identification ou la détermination du site à végétaliser comprend une étape de localisation, par tous moyens techniques adéquats, de cours d'eau, de bocages, de bosquets, de forêts, à proximité du site concerné, de préférence à moins de deux kilomètres du site, dans une densité et un degré de maillage qu'il peut être avantageux d'évaluer.

Le critère biologique est considéré comme rempli, si à moins de 2 kilomètres du site concerné, se trouvent un ou plusieurs cours d'eau, bocages, bosquets, forêts ou une combinaison quelconque de ceux-ci. Cela présente l'avantage de faciliter la migration naturelle de la faune, permettant une renaturation du site plus rapide.

Le critère administratif est un critère optionnel. Il est, ou comprend, la superficie du site, ou un pourcentage de superficie du site par rapport à un territoire donné.

L'identification ou la détermination du site à végétaliser comprend une étape de mesure de la superficie totale du site concerné, par tous moyens techniques adéquats, par exemple ceux mis en œuvre pour l'analyse topographique.

Le critère administratif est considéré comme rempli, si la superficie globale du site est comprise entre 500m² et 500 hectares.

L'étape de choisir et de prendre, les espèces végétales, à replanter sur le lieu anthropique de la méthode de végétalisation selon l'invention, comprend le choix de certains arbres et plantes à implanter, semer ou replanter, dans les catégories suivantes :
- les espèces végétales dites « indigènes », regroupant les espèces actuelles, naturellement présentes sur le territoire, la région géographique ou le pays, dans lequel se situe le site à revégétaliser. Il peut s'agir des espèces végétales déjà présentes sur le site à revégétaliser, si ce dernier en comprend, ou pouvant apparaître par régénération spontanée depuis la banque de graines du sol ou pouvant apparaître par dispersion,
- les espèces végétales dites « reliques ou relictuelles », regroupant celles qui étaient présentes, au Néogène et/ou au début de Pléistocène, sur le territoire, la région ou le pays, dans lequel se situe le site à revégétaliser, qui persistent de manière moderne, mais dont l'aire de répartition s'est contractée et qui se retrouvent actuellement dans des biotopes ou des zones géographiques très réduites et isolées, à savoir situés à une distance importante du plus proche biotope similaire, et
- les espèces végétales dites « analogues modernes », regroupant les espèces végétales proches parentes actuelles des espèces éteintes, mais ayant été présentes sur le territoire, la région ou le pays, dans lequel se situe le site à revégétaliser, au Néogène et/ou au début de Pléistocène. Ces espèces analogues sont du même rang taxonomique, ou d'un rang taxonomique très proche, de celles éteintes, et y sont étroitement apparentées.

Les espèces végétales proches parentes actuelles des espèces disparues du Néogène et/ou au début de Pléistocène présentent l'avantage d'être des espèces adaptées aux conditions climatiques actuelles qui sont désormais proches de celles du climat du Pliocène, une époque du Néogène. En effet, pendant la période chaude du Pliocène moyen, il y a environ 3,6 millions d'années, la température était de deux à quatre degré en moyenne plus élevée qu'avant l'ère industrielle et les concentrations de dioxyde de carbone atmosphériques se situaient entre 400 et 450 ppm, selon les reconstitutions paléoclimatiques, des valeurs comparables aux valeurs actuelles.

Le choix des espèces végétales reliques ou relictuelles et des analogues modernes peut se faire parmi une ou plusieurs listes, ou bases de données, prédéterminées pour chacune des catégories concernées, préalablement établies pour, et spécifiques au, territoire, région ou pays, dans lequel se situe le lieu anthropique à végétaliser. Il peut s'agir de revues de littératures scientifiques. Cela présente l'avantage d'optimiser les chances d'avoir une végétalisation réussie et durable.

Cette liste ou base de données comprend toutes les données ou informations adéquates concernant ces espèces végétales reliques ou relictuelles, par exemple des données écologiques, biologiques, dendrologiques, génétiques, morphologiques, anatomiques, phénologiques, paléobotaniques, cladistiques, ethnobotaniques, économiques, ou autres informations adéquates concernant le végétal ciblé. Ces informations vont de la phylogénie de l'espèce à la description de son habitat d'origine, à ses besoins stationnels, sa hauteur, son diamètre, son taux de croissance moyen, son anatomie foliaire, sa pollinisation, son ou ses partenaire(s) de dispersion, son potentiel d'invasivité, sa comestibilité, son utilité directe pour l'homme ou la faune, sa résistance ou sensibilité aux pathogènes, et pour les ligneux, sa xylologie, sa quantité moyenne d'absorption de dioxyde de carbone, et une combinaison quelconque de ceux-ci.

Cette liste, ou base de données, comprend, ou coopère avec, des moyens de stockage, des moyens de sortie ou d'affichage des informations qui comprennent ou coopèrent avec des moyens informatiques, modèles, matériels et logiciels.

De préférence, le choix des espèces végétales analogues modernes se fait en fonction de leur proximité génétique, cladistique, morphologique, phytosociologique, d'amplitude écologique, et une combinaison quelconque de ceux-ci, avec les espèces végétales disparues.

L'amplitude écologique doit se comprendre comme étant l'écart entre la valeur maximale et la valeur minimale des besoins en lumière, humidité, température, continentalité, pH, type de sol, teneur en matières organiques du sol, salinité, entre lequel l'espèce végétale peut vivre et se reproduire normalement.

Cette ou ces proximités comprennent, par exemple, leur besoins en termes de climat, de type de sols, de leur fonction écologique et d'interaction avec la faune, avec les espèces végétales disparues qui peuplaient le territoire, région ou pays, abritant le site anthropique à végétaliser, et éventuellement également en fonction de la fonction finale du site végétalisé, par exemple la restauration d'une biodiversité perdue, la production alimentaire, l'impact environnemental sur l'eau, l'air ou les sols, l'éducation et la sensibilisation du public, des intérêts économiques.

De préférence, cette étape de choisir des espèces végétales analogues modernes comprend une étape d'identification des espèces fossiles du Néogène et/ou au début de Pléistocène, d'arbres, d'arbustes, de plantes herbacées et de plantes grimpantes, constitutives des forêts du territoire, région ou pays, du site à revégétaliser, de les comparer avec les espèces végétales modernes et de chercher, pour les identifier, les espèces végétales étroitement apparentées actuellement existantes. Avantageusement, cette étape de choisir des espèces végétales analogues modernes est combinée avec une recherche écologique des taxons, des espèces végétales actuelles existantes, pour cerner leurs habitats, leurs besoins écologiques, afin d'intégrer les espèces végétales analogues de manière adaptée sur le site à végétaliser.

Le choix des espèces végétales à implanter peut mettre en œuvre des moyens matériels et logiciels, des moyens de stockage et de traitement, d'un système informatique, comprenant par exemple un ordinateur.

À titre d'exemple, la flore de la France en particulier, et de l'Europe en générale, comprenait naturellement au Néogène et/ou au début de Pléistocène, des kiwis, des pacaniers, des arbres à clochette d'argent, des paulownias, des magnolias, des torreyas, des cabrillets, des glycines, des ginkgos, des aralies, des arbres à gutta-percha, des clavaliers. Ces essences, désormais éteintes en Europe, sont toujours présentes, parfois sous une forme inchangée, bien plus souvent sous les traits de proches parentes vivant dans les forêts chinoises et nord-américaines.

De préférence, 30 à 50% des espèces végétales choisies pour être implantées sur le lieu anthropique sont des essences végétales indigènes, 5 à 10% des essences végétales reliques ou relictuelles et 40 à 65% des essences végétales analogues. La somme des pourcentage des essences végétales indigènes, des essences végétales reliques ou relictuelles et des essences végétales analogues représentant 100% des espèces végétales sélectionnées.

De préférence, le pourcentage des essences végétales reliques ou relictuelles est fixé préalablement, et les pourcentages des essences végétales indigènes et des essences végétales analogues sont fixés et ajustés en fonction de celui des essences végétales reliques ou relictuelles.

L'emploi de ces proportions de différentes essences végétales dans l'ensemble des espèces végétales sélectionnées présente l'avantage de présenter une grande mixité pour former un boisement complexe et multi-étagé, permettant de constituer un habitat ou une source de nourriture pour la faune animale.

De préférence, il est également possible de prendre et de planter, en supplément des espèces végétales choisies, des espèces végétales supplémentaires, dites « fertilitaires », comme du chêne, du châtaignier, du noyer et du noisetier, et une combinaison de ceux-ci, afin de modifier, avantageusement rapidement, les paramètres environnementaux du site, tels que la lumière, la composition et la densité racinaires, l'hygrométrie et l'effet brise-vent, encore plus avantageusement selon une disposition d'implantation déterminée. À titre d'exemple, ces espèces végétales supplémentaires, fertilitaires, peuvent être implantées à raison de 1000 plants à l'hectare, en intercalaire des espèces cibles, et peuvent être dépressées quatre années après leur implantation.

L'étape de détermination du schéma de plantation, vertical et horizontal, des espèces végétales sélectionnées, permet de définir la ou les densités, et l'emplacement de chaque espèce végétale, donc d'organiser et de stratifier, les espèces végétales à semer ou replanter. Elle peut mettre en œuvre des moyens matériels et logiciels, des moyens de stockage et de traitement, d'un système informatique, comprenant par exemple un ordinateur.

De préférence, quatre strates végétales verticales sont définies, la première étant celle des arbres formant la canopée, la seconde étant celle des arbustes, la troisième étant celle des lianes et la dernière étant celles des herbacées.

De préférence, l'établissement des strates est mis en place successivement, par une installation phasée, par au départ les espèces pionnières, puis plus tard des espèces sciaphiles poussant à l'ombre de la canopée, afin de tenir compte des besoins en soleil ou en ombre des espèces végétales de chaque strate. Chaque strate est implantée soit précocement, soit en phase ultérieure après constitution d'une canopée, selon le comportement allant de pionnier à sciaphile des espèces qui constituent chaque strate.

De préférence, horizontalement, le schéma de plantation se fait afin d'obtenir un effet mosaïque, avec des zones changeantes, allant d'un couvert très refermé à des zones plus ouvertes, et des peuplements d'individus d'âge différents, ce qui permet d'obtenir une irrégularité dans le profil forestier, avec de préférence des lisières enrichies ayant une structure spatiale complexe, faite d'herbes, d'arbustes, d'arbres et de lianes, et un clairièrage compris entre 10 et 30% de la surface totale de la zone anthropique replanté. Avantageusement, le schéma de plantation tient compte d'un espacement moyen et irrégulier de 8 à 30 mètres pour les arbres majeurs des espèces végétales à implanter, de 6 à 45 mètres pour les arbustes des espèces végétales à implanter, de 20 à 200 mètres pour les lianes et une répartition diffuse de massifs d'herbacées.

De préférence, dans toutes ou parties des zones du site, le schéma de plantation peut reproduire ou s'approcher d'un assemblage d'espèces végétales propre à un étage stratigraphique du Néogène et du début du Pléistocène, par exemple une végétation du Zancléen, une végétation du Serravallien ou du Piacenzien, du Gélasien, du Calabrien, ou du Chibanien.

Ne pas implanter densément tous les secteurs du site anthropique et/ou laisser du vide entre les plantations permet de réduire les coûts de la végétalisation pour des grandes surfaces et permet une reforestation par zoochorie, par des animaux disperseurs, comme par exemple des fourmis, des geais, des passereaux, des écureuils et autres rongeurs, qui disséminent une partie des fructifications des plantes ou des arbres semenciers, dès l'arrivée à maturité sexuelle de ces derniers. C'est le cas par exemple des fourmis, geais, passereaux, écureuils et autres rongeurs. Cela présente l'avantage d'améliorer la renaturation du site anthropique.

L'étape d'implanter, de semer ou planter, les espèces végétales choisies, sur un lieu anthropique identifié ou déterminé, se fait selon le schéma de plantation déterminé, avec les essences végétales sélectionnées, dans les portions de 30 à 50% d'essences indigènes, de 5 à 10% d'espèces reliques ou relictuelles et 40 à 65% d'espèces analogues modernes d'espèces éteintes, par semis direct ou à l'aide d'individus préalablement mis en culture, de préférence pour obtenir différents niveaux de développement, avantageusement préalablement prédéfinis.

De préférence, la végétalisation du site anthropique se fait selon deux phases.

La première phase est, ou comprend, le semis surnuméraire d'individus, de préférence d'environ 1000 graines à l'hectare, d'espèces végétales supplémentaires, fertilitaires, en intercalaire des espèces végétales indigènes, analogues et relictuelles. La détermination et l'établissement du semis des individus surnuméraires peut mettre en œuvre des moyens matériels et logiciels, des moyens de stockage et de traitement, d'un système informatique, comprenant par exemple un ordinateur.

L'utilisation d'individus d'espèces végétales supplémentaires, fertilitaires, selon une disposition d'implantation déterminée, présente l'avantage d'obtenir une plantation très dense au départ, permettant de réduire la pression de prédation et de rapidement modifier les paramètres du site, tels que la lumière, l'hygrométrie, la composition racinaires et l'effet brise-vent. Ces espèces végétales supplémentaires, fertilitaires, peuvent être du chêne, du châtaignier, du noyer, du noisetier, et une combinaison quelconque de ceux-ci. De préférence, un dépressage de ces espèces végétales supplémentaires, fertilitaires, qui ont été semées, débute la quatrième année suivant celle du semis, afin de réduire l'emprise des plants surnuméraires et de fertiliser les essences implantées, que ces dernières soient indigènes, analogues ou relictuelles. La matière organique issue du dépressage est laissée sur site, afin de servir d'habitat biologique et comme fertilisant progressif.

Ce dépressage n'est pas une sélection d'un ou plusieurs types de végétaux, afin de ne garder que les végétaux ayant un caractère phénotypique particulier. Il s'agit de réduire la densité des espèces végétales supplémentaires, fertilitaires, voire d'éliminer toute lesdites espèces végétales supplémentaires, fertilitaires, dans leur totalité, une fois leurs rôles accomplis.

De façon concomitante, durant cette première phase, les espèces végétales à implanter, pionnières et post-pionnières, sont introduites ou favorisées, sur le site anthropique selon le schéma déterminé, par semis direct et/ou plantation, et également par régénération spontanée, par germination de la cryptobanque du sol et dispersion naturelle des graines pour les espèces indigènes, le semis et/ou la plantation pour les espèces reliques et analogues, de façon à conduire une première phase de formation boisée, composée de pionniers et de post-pionniers. La végétation sciaphile indigène est introduite dans une seconde phase, par régénération spontanée, semis ou plantation, la végétation sciaphile relique ou analogue l'est par semis ou plantation.

De préférence, le semis est privilégié pour les espèces végétales à implanter dotées de petites graines au comportement pionnier, qui sont semées en surface après décapage du couvert graminéen et labour léger, avantageusement à l'aide de moyens mécaniques adaptés, par exemple des tracteurs équipés de semoirs spécialement adaptés, ce qui permet de répandre les graines de manière uniforme sur de grandes surfaces. Après germination, en cas de semis dru, un dépressage pourra être effectué. De préférence, un ou plusieurs des engrais verts annuels peuvent être apportés pour protéger le sol, limiter l'érosion et conserver l'humidité.

Pour les espèces végétales à implanter dotées de grosses graines, leur semis se fait, soit sur placettes décapées manuellement ou mécaniquement et sur lit de semences travaillé, soit par tout autre moyen, par exemple par drone de semis déposant les graines, selon le schéma d'implantation, en suivant des données satellitaires et une carte topographique, pour une couverture sur de larges étendues.

S'agissant de la plantation des espèces végétales à implanter, celle-ci se fait, de préférence, en début d'automne, lors du retour des pluies, pour favoriser une meilleure reprise de la pousse, à partir de jeunes plants, produits en pot forestier profond et anti-chignon, mesurant entre 10 cm et 60 cm lors de leur implantation.

De préférence, des hydro-rétenteurs sont utilisés dans le trou de plantation, avec un disque de paillage de 60 cm de large pour chaque végétal, avec avantageusement des ombrières individuelles, laissant passer 30 à 50 % de lumière, disposées au pignon sud des plants sensibles et post-pionniers, et conservées durant les quatre années suivant l'implantation, afin de réduire l'intensité lumineuse de mai à octobre.

De préférence, sur les secteurs dont la pente est supérieure à 12%, l'érosion du sol du site de plantation est limitée à l'aide de tous moyens adéquats, par exemple par l'emploi de fascines et le tressage de branchages au pied des plantations.

De préférence, les jeunes pousses sont protégés par des manchons individuels.

La seconde phase de végétalisation est, ou comprend, l'implantation des arbustes de sous étages, des dryades et des sciaphiles indigènes, relictuelles et analogues, qui se fait, de préférence, en début d'automne, lors du retour des pluies, pour une meilleure reprise de la pousse, avantageusement avec l'utilisation d'hydro-rétenteur avec un disque de paillage de 60 cm de large pour chaque plantation et la protection des jeunes arbres par la pose de manchons individuels.

La méthode de végétalisation selon l'invention peut comprendre en outre une étape de restauration du microbiote du sol du lieu anthropique, qui comprend une étape de sélection et une étape de préparation d'une greffe d'un microbiote, mises en œuvre préalablement à l'étape de semer ou planter les espèces végétales sélectionnées sur le lieu anthropique.

Cette étape de restaurer du microbiote peut être précédée d'une étape d'étude de la biocénose présente sur le site anthropique avant la mise en œuvre des étapes de la méthode selon l'invention, de préférence lors de l'étape de l'étape préalable d'identification d'un ou plusieurs lieux anthropiques à végétaliser.

Cette étape de restaurer du microbiote comprend une étape de collecte d'un ou plusieurs échantillons de microbiotes forestiers, dans une ou plusieurs forêts, de préférence, du territoire, région ou pays, du site à revégétalisé, des forêts dites « naturelles » ou « semi-naturelles », à savoir celles ayant conservé un couvert forestier, de préférence complexe, depuis au moins 200 ans, avantageusement des forêts ayant conservé une continuité boisée depuis des millions d'années, plus avantageusement depuis le Néogène, et encore plus avantageusement ayant une biodiversité remarquable, due à leur isolement durant les grandes glaciations quaternaires, plus avantageusement une ou des forêts comprenant les espèces végétales analogues ou reliques ou relictuelles utilisées pour la végétalisation du site anthropique.

Un tel microbiote présente l'avantage de comprendre des associations mycorhiziennes ayant disparues sur le site anthropique à revégétaliser.

À Titre d'exemple, si le lieu anthropique à revégétaliser est situé en Europe, le microbiote peut être issu de la forêt de Pinde en Grèce et en Albanie, et/ou de la forêt de la région de Colchide en Géorgie.

De préférence, des analyses microbiologiques et métagénomiques sont réalisées sur le ou les échantillons de microbiote prélevés, afin d'identifier les champignons mycorhiziens, bactéries et autres micro-organismes présents, et de sélectionner les échantillons de microbiotes les plus adéquats au lieu anthropique à revégétaliser.

Le ou les microbiotes sont multipliés par tous moyens adéquats, pour ensuite être ensemencé sur le sol du lieu à revégétaliser, de préférence, sur au moins chaque zone destinée à recevoir un spécimen des espèces végétales sélectionnées pour la végétalisation, ou bien dans chaque trou de plantation, ou alors le ou les microbiotes sélectionnés sont enrobés autour des graines, ou ensemencés directement sur les racines, des espèces végétales sélectionnées ou dans le substrat ou la terre dans laquelle les espèces végétales se développent avant leur implantation sur le site anthropique. Cela présente l'avantage de contrôler l'amplification des communautés microbiennes, d'augmenter les chances de prise de greffe du microbiote, et donc de favoriser la réussite de la végétalisation du site anthropique.

Pour des semis, les graines des espèces végétales à replanter sont, de préférence, enrobées d'un mélange de 95% d'argile bentonite et de 5% du ou des microbiotes sélectionnés. De préférence, des semences non traitées chimiquement sont utilisées, pour permettre le développement du microbiote interne et périphérique des graines afin de favoriser la croissance des semis et favoriser la productivité végétale.

La restauration du microbiote du site anthropique avec un ou plusieurs microbiotes de forêts ancestrales du territoire, région ou pays, du site à revégétaliser, présente l'avantage d'améliorer la symbiose racinaire des espèces végétales à implanter, améliorant leur absorption des nutriments et leur adaptation aux différentes autres espèces végétales introduites sur le site à revégétaliser.

De préférence, il est également possible d'analyser préalablement le sol du site anthropique à végétaliser afin de connaitre le type de microbiote présent et sa composition, afin de sélectionner, si besoin, le type et la quantité de microbiote à y greffer. Il est également avantageux d'établir un profil organique et minéral, plus généralement agronomique, du sol du site, afin de permettre de déterminer la quantité et le type d'engrais ou d'intrants minéraux à éventuellement apporter au site.

La méthode de végétalisation peut comprendre en outre une étape de gestion des espèces végétales plantées, y compris les espèces végétales supplémentaires, fertilitaires. Cela comprend le remplacement au besoin des plants morts d'analogues et de relictuelles, la surveillance de l'apparition de la seconde génération de semences et de guider le recrutement pour maintenir le pourcentage de répartition des espèces végétales replantées à 30 à 50% pour les espèces indigènes, 40 à 65% pour les espèces analogues et 5 à 10% pour les espèces reliques ou relictuelles, et le dépressage des espèces végétales supplémentaires, fertilitaires.

La méthode de végétalisation selon l'invention confère au site anthropique à végétaliser des caractéristiques naturelles, une biodiversité végétale restaurée, et lui permet de constituer un habitat favorable à la faune. Elle permet également à la plantation forestière d'établissement obtenue directement par la méthode selon l'invention, à la forêt secondaire qui en découlera, et à l'écosystème obtenue par la méthode selon l'invention, d'avoir une capacité à se régénérer et à s'adapter qui sont améliorées.

La méthode de végétalisation selon l'invention est utilisée pour renaturer un site anthropique, par la restauration ou l'amélioration du sol, la restauration de la végétation et de la faune animale, afin de revenir à un état naturel ou proche du naturel.

La méthode de renaturation selon l'invention comprend la mise en œuvre de la méthode de végétalisation selon l'invention, et éventuellement également l'une ou une combinaison quelconque des étapes supplémentaires décrites ci-avant.

La méthode de végétalisation selon l'invention ou la méthode de renaturation selon l'invention peuvent comprendre en outre une étape d'étude du taux de croissance, du nombre d'individus des espèces végétales implantées qui sont bien portants, malades, dépérissants ou morts, une étape de coupe d'éclaircissement ou d'élimination des individus malades ou morts, une étape d'introduction de microbiotes et/ou de faune, et une combinaison quelconque de celles-ci.

La méthode de végétalisation selon l'invention ou la méthode de renaturation selon l'invention peuvent comprendre en outre une étape d'étude, de mesure et d'évaluation, de l'impact écologique des espèces végétales choisies et implantées sur le lieu à végétaliser et à renaturer, sur la qualité agronomique et biologique de son sol, sur le niveau et la qualité du microbiote du site, en particulier du microbiote greffé si le sol l'a été, sur l'ensemble des espèces végétales entre-elles, leur croissance respective, sur leur étagement, sur la quantité et le type de flore et faune locales, existantes préalablement ou celles constituées postérieurement à la végétalisation du site, en particulier concernant les herbivores, sur les effets directs et indirects des lieux jouxtant le site végétalisé, et une combinaison de ceux-ci.

L'ensemble de végétaux selon l'invention comprend une pluralité d'individus distincts, choisis et pris selon l'étape de la méthode de végétalisation selon laquelle les espèces végétales, à implanter, sont choisies dans les catégories des espèces végétales indigènes, regroupant les espèces végétales actuelles, naturellement présentes sur le territoire, la région géographique ou le pays, dans lequel se situe le site anthropique, des espèces végétales reliques ou relictuelles, regroupant les espèces végétales qui étaient présentes, au Néogène et/ou au début de Pléistocène, sur le territoire, la région ou le pays, dans lequel se situe le site anthropique, des espèces végétales analogues modernes, regroupant les espèces végétales proches parentes actuelles des espèces végétales éteintes, mais ayant été présentes au Néogène et/ou au début de Pléistocène, sur le territoire, la région ou le pays, dans lequel se situe le site anthropique. Ces individus se trouvent sous la forme de semences, de plantules et/ou de plantes matures, prélevées ou non dans la nature, en tout état de cause non encore installées ou implantées définitivement sur le site anthropique à revégétaliser, mais pouvant être conservés ex situ, en pépinière ou en conteneurs, y compris dans un substrat adéquat de culture, qui n'est pas le site anthropique sur lequel l'ensemble des végétaux doit être implanté.

Le site anthropique végétalisé selon l'invention est obtenue par la méthode de végétalisation selon l'invention. Il comprend une implantation de l'ensemble de végétaux selon l'invention ou des individus distincts d'espèces végétales choisis dans les catégories des espèces végétales indigènes, regroupant les espèces végétales actuelles, naturellement présentes sur le territoire, la région géographique ou le pays, dans lequel se situe le site anthropique, des espèces végétales reliques ou relictuelles, regroupant les espèces végétales qui étaient présentes, à la fin du Néogène et/ou au début de Pléistocène, sur le territoire, la région ou le pays, dans lequel se situe le site anthropique, des espèces végétales analogues modernes, regroupant les espèces végétales proches parentes actuelles des espèces végétales éteintes, mais ayant été présentes au Néogène et/ou au début de Pléistocène, sur le territoire, la région ou le pays, dans lequel se situe le site anthropique.

L'écosystème de site anthropique végétalisé selon l'invention est obtenue par la mise en œuvre de la méthode de végétalisation selon l'invention. Il comprend une implantation de l'ensemble de végétaux selon l'invention ou des individus distincts d'espèces végétales choisis dans les catégories des espèces végétales indigènes, présentes sur le territoire, la région géographique ou le pays, dans lequel se situe ledit site anthropique, des espèces végétales reliques ou relictuelles, qui étaient présentes au Néogène et/ou au début de Pléistocène, sur le territoire, la région ou le pays, dans lequel se situe ledit site anthropique, et des espèces végétales analogues modernes d'espèces éteintes, ayant été présentes au Néogène et/ou au début de Pléistocène, sur le territoire, la région ou le pays, dans lequel se situe ledit site anthropique, lesdites espèces végétales étant réparties sur ledit site anthropique selon des densités et des emplacements d'implantation pour chacune desdites espèces végétales sélectionnées, définis selon un schéma de plantation déterminé.

La plantation forestière selon l'invention, ou forêt revégétalisée selon l'invention, est obtenue par la méthode de végétalisation selon l'invention. Elle est une plantation dite d' « établissement » car elle résulte directement de la réalisation de la méthode de végétalisation selon l'invention, et donc de l'implantation des espèces végétales choisies selon l'invention, une forêt nouvellement implantée, dont le peuplement a été établi, par plantation ou semis, conformément à la méthode de végétalisation selon l'invention. La plantation forestière selon l'invention n'est pas une forêt dite « secondaire » qui résulterait de l'évolution naturelle de la plantation forestière selon l'invention ; Elle ne comprend pas d'individus qui auraient été obtenus exclusivement par croissement naturel de certains individus suivi de leur sélection les uns par rapport aux autres. En tout état de cause, la plantation forestière d'établissement, ou la forêt revégétalisée, selon l'invention, n'est pas obtenue exclusivement au moyen d'un procédé essentiellement biologique, car elle n'est pas obtenue par croisement naturel ou spontané suivi d'une sélection des individus issues du ou de ces croisements naturels pour obtenir une descendance particulière, mais est obtenu par un choix particulier et l'implantation d'espèces végétales choisies parmi des catégories particulières de végétaux, et leur implantation selon une répartition et un schéma particulier, qui est fonction du site anthropique à revégétaliser.

La plantation forestière d'établissement selon l'invention se distingue d'une forêt dite « naturelle » par les espèces végétales qui la composent et qui ont été choisies et implantées en fonction du site anthropique sur lequel elles ont été implantées. Elle comprend des espèces végétales indigènes, des espèces végétales reliques ou relictuelles et des espèces végétales analogues modernes d'espèces éteintes, telles que définies précédemment, qui ont été sélectionnées en fonction du site anthropique sur lequel est implanté la forêt, son environnement et sa nature, un site de préférence préalablement sélectionné ou identifié selon la méthode et les critères cités précédemment, selon un schéma de plantation déterminé, comme décrit précédemment.

L'ensemble de végétaux non implantés selon l'invention, le site anthropique végétalisé selon l'invention, la plantation forestière d'établissement selon l'invention et l'écosystème selon l'invention comprennent_30 à 50% d'essences indigènes, de 5 à 10% d'espèces reliques ou relictuelles et 40 à 65% d'espèces analogues modernes.

Le site anthropique végétalisé selon l'invention, la plantation forestière d'établissement selon l'invention et l'écosystème selon l'invention comprennent ou sont une implantation de végétaux stratifiée et mosaïque, à lisière enrichies et à un clairièrage compris entre 10 et 30% de la surface totale de la zone anthropique végétalisée. De préférence, elle comprend un espacement moyen et irrégulier de 8 à 30 mètres pour les arbres majeurs des espèces végétales à implanter, de 6 à 45 mètres pour les arbustes des espèces végétales à implanter, de 20 à 200 mètres pour les lianes et une répartition diffuse de massifs d'herbacées.

L'ensemble de végétaux non implantés selon l'invention, le site anthropique végétalisé selon l'invention, la plantation forestière d'établissement selon l'invention et l'écosystème selon l'invention peuvent comprendre en outre des espèces végétales supplémentaires, fertilitaires, telles que définies précédemment, permettant au départ, par leur croissance, puis ensuite par leur dépressage, la modification des paramètres environnementaux de la plantation forestière et l'écosystème.

L'ensemble de végétaux non implantés selon l'invention, le site anthropique végétalisé selon l'invention, la plantation forestière d'établissement selon l'invention et l'écosystème selon l'invention et/ou son sol peuvent comprendre en outre un microbiote restauré à base d'un ou plusieurs microbiotes prélevés dans une ou plusieurs forêts ancestrales.

Le site anthropique végétalisé selon l'invention, la plantation forestière d'établissement selon l'invention et l'écosystème selon l'invention comprennent une implantation végétale résiliente, adaptée aux changements climatiques, constituant un habitat mosaïque, un ensemble d'éléments nombreux et disparates, d'une grande diversité d'essences, d'âges différents et dans une communauté multi-strate. Elle présente l'avantage de former un écosystème équilibré et autonome.

Le site anthropique végétalisé selon l'invention, la plantation forestière d'établissement selon l'invention et l'écosystème selon l'invention peuvent être utilisés comme outil d'éducation et de sensibilisation. Ils sont également un support scientifique, pour mieux connaitre et comprendre les interactions écologiques passées, présentes et à venir. Ils peuvent être_aussi un pôle culturel et écologique, pouvant créer ainsi un système économique.

## Revendications

1. Méthode de végétalisation d'un site anthropique comprenant les étapes de :
- prendre un site anthropique à végétaliser,
- choisir et prendre les espèces végétales, à implanter sur ledit site anthropique, dans les catégories suivantes :
des espèces végétales indigènes, regroupant les espèces végétales actuelles, naturellement présentes sur le territoire, la région géographique ou le pays, dans lequel se situe ledit site anthropique,
des espèces végétales reliques ou relictuelles, regroupant les espèces végétales qui étaient présentes, au Néogène et/ou au début de Pléistocène, sur le territoire, la région ou le pays, dans lequel se situe ledit site anthropique,
des espèces végétales analogues modernes, regroupant les espèces végétales proches parentes actuelles des espèces végétales éteintes, mais ayant été présentes au Néogène et/ou au début de Pléistocène, sur le territoire, la région ou le pays, dans lequel se situe ledit site anthropique,
- de déterminer un schéma de plantation desdites espèces végétales sélectionnées sur ledit site anthropique, définissant des densités et des emplacements d'implantation pour chacune desdites espèces végétales sélectionnées,
- d'implanter lesdites espèces végétales choisies sur ledit site anthropique, selon ledit schéma déterminé.

2. La méthode selon la revendication 1, dans laquelle le choix des espèces végétales à implanter, parmi les espèces végétales analogues modernes, se fait en fonction de la proximité génétique, cladistique, morphologique, phytosociologique, d'amplitude écologique, et une combinaison quelconque de ceux-ci, des espèces végétales actuelles avec les espèces végétales éteintes.

3. La méthode selon l'une quelconque des revendications précédentes, dans laquelle les espèces végétales indigènes représentent 30 à 50%, les espèces végétales reliques ou relictuelles 5 à 10%, et les espèces végétales analogues modernes 40 à 65%, de l'ensemble des espèces végétales sélectionnées.

4. La méthode selon l'une quelconque des revendications précédentes, dans laquelle le schéma de plantation, desdites espèces végétales choisies sur ledit site anthropique, définit quatre strates végétales, une première étant celle des arbres, une seconde étant celle des arbustes, une troisième étant celle des lianes, la quatrième étant celle des herbacées.

5. La méthode selon l'une quelconque des revendications précédentes, dans laquelle le schéma de plantation comprend un espacement moyen et irrégulier de 8 à 30 mètres pour les arbres majeurs des espèces végétales choisies, de 6 à 45 mètres pour les arbustes des espèces végétales choisies, de 20 à 200 mètres pour les lianes des espèces végétales choisies, et une répartition diffuse pour les herbacées des espèces végétales choisies.

6. La méthode selon l'une quelconque des revendications précédentes, dans laquelle l'étape d'implanter les espèces végétales choisies sur le site anthropique se fait concomitamment à une étape d'implantation d'espèces végétales supplémentaires, en plus des espèces végétales choisies, selon une disposition d'implantation prédéterminée.

7. La méthode selon l'une quelconque des revendications précédentes, comprenant en outre une étape de restauration du microbiote du sol du lieu anthropique, qui comprend une étape d'ensemencer le sol du site anthropique, d'enrober les graines des espèces végétales choisies, d'ensemencer les racines des espèces végétales choisies, et une combinaison quelconque de celles-ci, à l'aide d'un ou plusieurs microbiotes.

8. La méthode selon la revendication 7, dans laquelle le ou les microbiotes est ou sont ceux d'une ou plusieurs forêts ancestrales.

9. La méthode selon l'une quelconque des revendications précédentes, comprenant en outre une étape préalable d'identifier un ou plusieurs sites anthropiques à végétaliser, ou une étape préalable de détermination si un site donné peut être considéré comme adéquat.

10. La méthode selon la revendication 9, dans laquelle l'étape d'identification du site anthropique à végétaliser, ou l'étape de détermination du site anthropique à végétaliser, se fait selon un ou plusieurs critères, choisis parmi un critère physico-chimiques, un critère climatique, un critère topographique, et éventuellement un critère biologique et un critère administratif, et une combinaison quelconque de ceux-ci.

11. La méthode selon la revendication 10, dans laquelle le critère physico-chimique est, ou comprend la texture du sol du site anthropique et/ou son pH, le critère climatique est, ou comprend, la nature du climat dudit site anthropique, le critère topographique est, ou comprend, la topographie dudit site anthropique et son l'hydrographie, le critère biologique est, ou comprend, la présence de corridors biologiques à proximité dudit site anthropique, le critère administratif est, ou comprend, la superficie dudit site anthropique.

12. La méthode selon l'une quelconque des revendications précédentes, dans laquelle le site anthropique est choisi parmi un site urbain, un site agricole, un site industriel, une zone récréative, et une combinaison quelconque de ceux-ci.

13. Utilisation de la méthode de végétalisation selon l'une quelconque des revendications précédentes pour la renaturation d'un site anthropique.

14. Ensemble de végétaux non implantés comprenant des individus distincts d'espèces végétales choisis dans les catégories des espèces végétales indigènes, regroupant les espèces végétales actuelles, naturellement présentes sur le territoire, la région géographique ou le pays, dans lequel se situe le site anthropique, des espèces végétales reliques ou relictuelles, regroupant les espèces végétales qui étaient présentes, à la fin du Néogène et/ou au début de Pléistocène, sur le territoire, la région ou le pays, dans lequel se situe le site anthropique, des espèces végétales analogues modernes, regroupant les espèces végétales proches parentes actuelles des espèces végétales éteintes, mais ayant été présentes au Néogène et/ou au début de Pléistocène, sur le territoire, la région ou le pays, dans lequel se situe le site anthropique.

15. Site anthropique végétalisé comprenant des espèces végétales indigènes, présentes sur le territoire, la région géographique ou le pays, dans lequel se situe ledit site anthropique, des espèces végétales reliques ou relictuelles, qui étaient présentes au Néogène et/ou au début de Pléistocène, sur le territoire, la région ou le pays, dans lequel se situe ledit site anthropique, et des espèces végétales analogues modernes d'espèces éteintes, ayant été présentes au Néogène et/ou au début de Pléistocène, sur le territoire, la région ou le pays, dans lequel se situe ledit site anthropique, lesdites espèces végétales étant réparties sur ledit site anthropique selon des densités et des emplacements d'implantation pour chacune desdites espèces végétales sélectionnées, définis selon un schéma de plantation déterminé.

16. Écosystème de site anthropique végétalisé comprenant des espèces végétales indigènes, présentes sur le territoire, la région géographique ou le pays, dans lequel se situe ledit site anthropique, des espèces végétales reliques ou relictuelles, qui étaient présentes au Néogène et/ou au début de Pléistocène, sur le territoire, la région ou le pays, dans lequel se situe ledit site anthropique, et des espèces végétales analogues modernes d'espèces éteintes, ayant été présentes au Néogène et/ou au début de Pléistocène, sur le territoire, la région ou le pays, dans lequel se situe ledit site anthropique, lesdites espèces végétales étant réparties sur ledit site anthropique selon des densités et des emplacements d'implantation pour chacune desdites espèces végétales sélectionnées, définis selon un schéma de plantation déterminé.

17. Plantation forestière d'établissement obtenue par la méthode selon l'une quelconque des revendications 1 à 12.

18. Plantation forestière d'établissement sur site anthropique, comprenant des espèces végétales indigènes, présentes sur le territoire, la région géographique ou le pays, dans lequel se situe ledit site anthropique, des espèces végétales reliques ou relictuelles, qui étaient présentes au Néogène et/ou au début de Pléistocène, sur le territoire, la région ou le pays, dans lequel se situe ledit site anthropique, et des espèces végétales analogues modernes d'espèces éteintes, ayant été présentes au Néogène et/ou au début de Pléistocène, sur le territoire, la région ou le pays, dans lequel se situe ledit site anthropique, lesdites espèces végétales étant réparties sur ledit site anthropique selon des densités et des emplacements d'implantation pour chacune desdites espèces végétales sélectionnées, définis selon un schéma de plantation déterminé.
